# EUROPÄISCHE PATENTSCHRIFT

(11) **EP 0 727 655 B1**
(45) Veröffentlichungstag und Bekanntmachung des Hinweises auf die Patenterteilung: **06.09.2000**
(21) Anmeldenummer: 95810803.7
(22) Anmeldetag: 19.12.1995
(51) Int. Cl.: G01N 15/08

(54) **Messeinrichtung und Verfahren zur Messung der Sauerstoffpermeabilität eines Prüflings**
Device and process for measuring oxygen permeability of a test piece
Dispositif et procédé de mesure de la perméabilité d'oxygène d'un échantillon

(30) Priorität: 15.02.1995 CH 43895
(43) Veröffentlichungstag der Anmeldung: 21.08.1996
(73) Patentinhaber: Lyssy, Georges H., Dr., CH-8702 Zollikon (CH)
(72) Erfinder: Lyssy, Georges H., Dr., CH-8702 Zollikon (CH)
(74) Vertreter: Feldmann, Clarence Paul

(56) Entgegenhaltungen:
- EP-A- 0 266 955
- WO-A-94/29709
- US-A- 3 604 246
- US-A- 4 660 411
- US-A- 5 361 625

## Beschreibung

Die vorliegende Erfindung betrifft eine Vorrichtung zur Messung der Sauerstoffpermeabilität eines Prüflings, nämlich einer Folie oder eines Hohlkörpers gemäss Oberbegriff des Patentanspruches 1. Die Erfindung betrifft des weiteren ein Verfahren zur Messung der Sauerstoffpermeabilität unter Verwendung der erfindungsgemässen Messeinrichtung.

Verfahren und Vorrichtungen zur Messung der Gasdurchlässigkeit von Folien oder Hohlkörpern sind seit rund dreissig Jahren bekannt und auf dem Markt angeboten. Ein typisches Beispiel einer solchen Messeinrichtung und dem entsprechenden Verfahren geht beispielsweise aus der CH-A-551'005 hervor. Aber bereits früher waren Messeinrichtungen zur Bestimmung der Gasdurchlässigkeit bekannt, wie aus entsprechenden Normblättern hervorgeht. Hierzu wird beispielsweise auf die DIN Norm 53380 vom Juni 1969 oder auf die ISO/DIS 2556 hingewiesen. Bei diesen Verfahren wird eine Seite einer zu prüfenden Folie einem Probegas unter atmosphärischem oder geringem Ueberdruck ausgesetzt, währenddem auf der anderen Seite während der Messung Unterdruck herrscht, beziehungsweise zwischen den Messungen erzeugt wird, welcher je nach der Durchlässigkeit der Folie mehr oder weniger schnell aufgefüllt wird, wobei der Druckanstieg in Funktion der Zeit ein Massstab für die Durchlässigkeit der Folie ist. Ferner sind Geräte bekannt zur Messung der Wasserdampfabgabe einer Materie, beziehungsweise zur Messung der Wasserdampfpermeabilität von Prüflingen, die einen apparativ ähnlichen Aufbau haben. Diesbezüglich wird beispielsweise auf die DE-A-38'19'335, EP-A-0'408'488 und die CH-A-684'503 verwiesen.

Aus der US-A-4'660'411 ist des weiteren ein Verfahren und eine Vorrichtung bekannt, bei der in mehreren parallel geschalteten Messkammern auf der einen Seite des Prüflings ein Trägergas zugeführt und während einer Messperiode eingeschlossen wird, während auf der anderen Seite transmittierendes Gas durchgeführt wird. Nach einer Messperiode wird danach das Trägergas in der ursprünglichen Zusammensetzung mit dem mit transmittierendem Gas angereicherten Trägergas einer Messsonde zur vergleichenden Messung zugeführt.

Die bekannten Verfahren und ihre entsprechenden Vorrichtungen sind jedoch nicht spezifisch auf die Messung der Sauerstoffpermeabilität ausgelegt. Mittels den eingangs erwähnten, in den Normblättern beschriebenen Messgeräten konnte eine Sauerstoffpermeabilität zwar nach dem bekannten manometrischen Messprinzip ermittelt werden, doch sind diese Verfahren äusserst zeitraubend, relativ unpräzis und stellen hohe Anforderungen an die Dichtigkeit der Messeinrichtung. Ebenso ist es bekannt, mittels entsprechenden Anordnungen coulometrisch oder auf gaschromatographischem Wege den Sauerstoffgehalt des Permeats zu bestimmen. Auch diese Verfahren sind relativ aufwendig und zeitraubend.

Seit mehreren Jahren sind auch Reingas-Analysatoren auf dem Markt erhältlich, die zur Messung von Sauerstoff im Spuren- bis Prozentbereich in sauberen Trägergasen wie Stickstoff, Argon oder Kohlendioxid dienen. Solche Geräte werden insbesondere zur Sauerstoffregelung an gasgefeuerten Verbrennungsprozessen eingesetzt. Solche Geräte weisen als Sensor eine Zirkoniumoxid-Sauerstoff-Messzelle auf, wie sie beispielsweise aus der WO 94/29709 bekannt ist. Bei der bekannten Zirkoniumoxid-Sauerstoff-Messzelle tritt das Messgas durch ein keramisches Einlassrohr ein. Dann durchströmt es einen ringförmigen Raum zwischen Einlassrohr und dem Innern der Messzelle. Das Messgas tritt durch eine Austrittsöffnung wieder aus. Ein Platinkatalysator am Ende des Keramikrohres sorgt dafür, dass das Messgas Gleichgewicht erreicht, bevor es die innere Elektrode berührt. So kann entweder der Ueberschuss oder der Mangel an Sauerstoff in einem Brennluftgemisch festgestellt werden. Sobald das Messgas die innere Elektrode der beheizten Zelle berührt, wird ein elektrisches Signal erzeugt, das zum Logarithmus der Sauerstoffkonzentration proportional ist. Das Messignal errechnet sich aus dem Logarithmus des Verhältnisses der Sauerstoffkonzentration im Messgas zu der Sauerstoffkonzentration im Referenzgas. Das Referenzgas ist mit der äusseren Elektrode in Berührung.

Obwohl die beschriebene Messzelle bereits seit mehreren Jahren auf dem Markt erhältlich ist, wurde die Anwendung für die Permeabilitätsmessung bisher nicht erkannt. Dies obwohl die beschriebene Messzelle enorme Vorteile zeigt, nämlich eine Genauigkeit im ppm-Bereich, eine Messung, die durch die Luftfeuchtigkeit nicht beeinflusst wird und eine Messgeschwindigkeit, die annähernd einer Momentanmessung gleichkommt.

Die US-A-3'604'246 offenbart eine Permeabilitätsmessvorrichtung mit den Merkmalen des Oberbegriffes des Patentanspruches 1, wobei nur eine Vorrichtung zur Wasserdampfdurchlässigkeitsmessung beschrieben ist. Der von einer Druckquelle kommende Luftstrom wird in zwei Teilluftströme geteilt. Ein Teilluftstrom wird trocken in die Messkammer geführt, der zweite Teilluftstrom wird wasserdampfgesättigt in die Messkammer geführt. Der Messgasstrom ist zu einem Sensor geführt. Zur Einstellung erfolgt vor der Messung eine Referenzmessung ohne Permeabilitätsbelastung.

Letztlich ist aus der EP-A-0'266'955 ein Verfahren zur Gaspermeabilitätsmessung bekannt, wobei wie üblich in der Messkammer an einer Seite des Prüflings das zu permeierende Gas anliegt und auf der anderen Seite ein Inertgas. Gleichzeitig ist in der Messkammer ein elektrochemischer Gassensor untergebracht. Die Messung erfolgt durch Druckdifferenz welcher während einer vorgegebenen Zeit anliegt.

Die vorliegende Erfindung hat sich zur Aufgabe gestellt, eine Vorrichtung gemäss Oberbegriff des Patentanspruches 1 zu schaffen, welche im Vergleich zu bisher bekannten Permeablitätsmessvorrichtungen schneller, exakter und preiswerter ist und von störenden Einflüssen kaum verfälscht arbeitet.

Diese Aufgabe löst eine Vorrichtung mit den Merkmalen des Patentanspruches 1.

Dank der erfindungsgemässen Vorrichtung lässt sich die Permeabilitätsmessung besonders einfach und preiswert realisieren, wenn der Messluftstrom und der Referenzstrom in offener Zirkulation geführt werden.

Ist der Prüfling beispielsweise eine Folie mit sehr geringer Permeabilität, so kann das Verfahren dahingehend geändert werden, dass der Messluftstrom im geschlossenen Kreislauf geführt wird. In diesem Fall findet eine Agglomeration statt, wobei derselbe Messluftstrom mehrmals am Prüfling vorbei geführt wird, wodurch in Abhängigkeit der Zeit eine Sauerstoffanreicherung stattfindet.

Bevorzugte Ausführungsformen der erfindungsgemässen Messeinrichtung gehen aus den abhängigen Patentansprüchen hervor. Der Luftstrom, der je in einen volumenkonstanten Referenzluftstrom und einen Messluftstrom geteilt wird, kann von verschiedenen Druckquellen geliefert werden. In diesem Zusammenhang muss erwähnt werden, dass Luftstrom hier im verallgemeinernden Sinn zu vestehen ist und es sich hierbei ganz generell um eine Strömung von Gas oder Gasgemischen, insbesondere aber auch um Luft handeln kann. Je nach der Art der Gase beziehungsweise Gasgemische, die bei der Messung zur Anwendung gelangen, kann es daher vorteilhaft sein, wenn die Druckquelle eine Druckgasflasche ist, deren Austrittsluftstrom durch einen Strömungsteiler oder einen Durchflussmengenmesser in zwei volumenkonstante Luft- oder Gasströme unterteilbar ist. Die Druckquelle kann aber auch mindestens eine Zirkulationspumpe sein, die zwei gleiche Luft- oder Gasströme liefert. Hierbei wird insbesondere an eine Zweikanalperistaltikpumpe gedacht. Weitere vorteilhafte Ausgestaltungsformen des Erfindungsgegenstandes und des erfindungsgemässen Verfahrens gehen aus den abhängigen Ansprüchen und der nachfolgenden Beschreibung hervor.

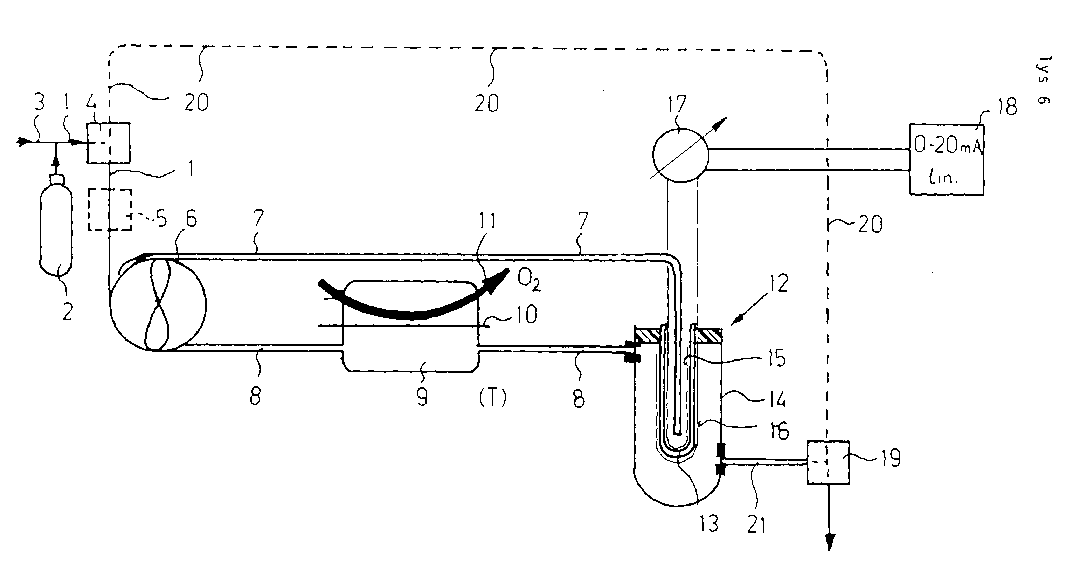

In der anliegenden Zeichnung ist ein bevorzugtes Ausführungsbeispiel des Erfindungsgegenstandes dargestellt und an Hand der nachfolgenden Beschreibung erläutert. Die einzige Figur zeigt schematisch den Aufbau der erfindungsgemässen Messeinrichtung, an Hand dessen auch das erfindungsgemässe Verfahren beschrieben wird.

Das erfindungsgemässe Verfahren lässt sich mit Gas, Gasgemischen oder Luft als ein bevorzugtes Gasgemisch durchführen. Je nachdem kann dieses Gas oder Gasgemisch in Form einer Druckgasflasche 2 oder über eine Ansaugleitung 3 anliegen. Es gelangt via einer Zufuhrleitung 1 zu einem Umschalt- beziehungsweise Schliessventil 4, von welchem aus die Zufuhrleitung 1 zu einer Zirkulationspumpe 6 führt. Liegt das Gas oder Gasgemisch bereits unter Druck aus der Druckgasflasche 2 an, so kann gegebenenfalls die Zirkulationspumpe 6 entfallen, wenn stattdessen ein Strömungsteiler 5 vorgesehen ist, wie dies in der Zeichnung strichliniert dargestellt ist. Der Strömungsteiler 5 oder Druchflussmengenmesser teilt dann den anliegenden Gas- oder Gasgemischstrom in zwei konstante Ströme auf. Der eine Teilluftstrom bildet dann den Referenzluftstrom, welcher durch eine Referenzluftstromleitung 7 direkt zur Zirkoniumoxid-Sauerstoff-Messonde 12 geführt ist. Der zweite Teilluftstrom wird durch eine Messluftstromleitung 8 zur Messkammer 9 geführt und gelangt von dort zur Zirkoniumoxid-Sauerstoff-Messonde 12. Die Messkammer 9 ist zweigeteilt, wobei ein Prüfling 10 die Messkammer 9 in zwei Teilmessbereiche unterteilt. Handelt es sich beim Prüfling um eine zu prüfende Folie, so überstreicht der Messluftstrom aus der Leitung 8 die eine Seite der Folie, während auf der anderen Seite der Folie reiner Sauerstoff oder ein sauerstoffangereichertes Gas beziehungsweise Gasgemisch entlang geführt wird. Dies ist symbolisch durch den Pfeil 11 dargestellt, der den Sauerstoffdurchfluss symbolisiert.

Die Zirkoniumoxid-Sauerstoff-Messonde 12 ist, wie eingangs erwähnt, ein bekanntes, auf dem Markt seit mehreren Jahren bereits erhältliches Element. Allerdings wurde dieses Element für die Permeabilitätsmessung bisher noch nie eingesetzt. Die Zirkoniumoxid-Sauerstoff-Messonde 12 umfasst ein Keramikrohr 13, welches ähnlich einem Reagenzglas gestaltet ist und endseitig auf einer Seite geschlossen ist. Das Keramikrohr 13 ist innen und aussen mit einer Zirkoniumoxidschicht beschichtet. Ueber dieser ist meist eine luftdurchlässige Schutzschicht angebracht, beispielsweise aufgedampft. Eine solche Schutzschicht kann beispielsweise aus einem nichtoxidierenden Edelmetall gefertigt sein. So ergibt sich eine innere Elektrode 15 und eine äussere Elektrode 16. Das beschichtete Keramikrohr 13 lagert gasdicht distanziert in einem gasdichten Gehäuse 14. Zwischen dem Keramikrohr und dem gasdichten Gehäuse 14 wird über die Messluftstromleitung 8 der Messluftstrom zwischen das Keramikrohr 13 und das Gehäuse 14 eingeleitet und an einem gegenüberliegenden entfernten Ort über eine Ableitung 21 weggeführt. An der Innenseite des Keramikrohres 13 und damit an der inneren Elektrode 15 wird der Referenzmessstrom über die Leitung 7 zugeführt. Die Messzelle selbst wird mittels einer nicht dargestellten Heizung auf circa 800°C aufgeheizt und auf dieser Temperatur thermostatisch überwacht. Zwischen der inneren und äusseren Elektrode des zirkoniumoxidbeschichteten Keramikrohrs entsteht ein elektrisches Signal, welches proportional dem Logarithmus der Sauerstoffkonzentrationsdifferenz ist. Dieses Signal wird linearisiert mittels der nicht genauer beschriebenen elektronischen Linearisiereinheit 18, welche das am Voltmeter 17 anliegende Signal in ein der Sauerstoffpermeabilität lineares Signal umwandeln kann. Die Messkammer 9 wird ebenfalls thermostatiert, und zwar auf die gewünschte Messtemperatur von beispielsweise 25°C.

Handelt es sich beim Prüfling 10 um einen Hohlkörper, so wird dieser in die Messkammer 9 eingebracht und so angeschlossen, dass beispielsweise der Messluftstrom durch den Hohlkörper und der Sauerstoff aussen am Hohlkörper vorbeiströmt. Selbstverständlich lässt sich diese Anordnung auch umkehren, so dass der Messluftstrom aussen am Hohlkörper und der Sauerstoff beziehungsweise das sauerstoffangereicherte Gasgemisch durch den Hohlkörper geführt wird.

Ist die Sauerstoffdurchlässigkeit des zu prüfenden Prüflings sehr gering, so kann man den Messluftstrom auch mehrmals durch die Messkammer hindurchführen. Entsprechend wird die Ableitung 21 durch ein Umschalt- beziehungsweise Schliessventil 19 geführt. Durch Umschaltung dieses Ventils 19 lässt sich der abgeleitete Strom 'über eine Rückleitung 20 und über das Umschaltventil 4 wieder in die Zufuhrleitung 1 zurückleiten. Die Zirkulationspumpe 6 fördert somit den Messluftstrom in einem geschlossenen Kreislauf. Dies trifft jedoch niemals auf den Referenzluftstrom zu. Dieser Luftstrom wird immer offen geführt. Entsprechend arbeitet man entweder mit zwei getrennten Zirkulationspumpen oder mit einer Zweikanalzirkulationspumpe, wobei einerseits sichergestellt wird, dass die Rückleitung 20 direkt zur Zirkulationspumpe 6 gelangt, während über eine getrennte Leitung frische Luft in die Referenzluftstromleitung 7 gefördert wird.
Als Zirkulationspumpe kommt insbesondere eine Zweikanalperistaltikpumpe in Frage. Andere Pumpen sind jedoch nicht ausgeschlossen. Wesentlich ist nur, dass beide Luftströme synchron und kontinuierlich gefördert werden.

Die Sensibilität der beschriebenen Zirkoniumoxid-Sauerstoff-Messzelle 12 geht aus der nachfolgenden Tabelle hervor:

| | |
|---|---|
| 50 µl/day | 1 ml/m³.day = 50 µl/50 cm³.day |
| 5 µl/2.4 h | Vᵢ = 30 ml |
| 0.5 µl/15' min | 1 ^{o}/oo = 30 µl |
| 0.05 µl/1.5' min | 1 ppm = 0.03 µl |
| 0.015 µl/27 sec | 500 ppb = 0.015 µl = full scale = 20mA Signal |
| 0.00015 µl/0.27 sec | 5 ppb = 0.00015 µl = 0.2 mA Signal |

Hieraus ergibt sich, dass die Messung ausserordentlich schnell und hochsensibel sogar im ppb-Bereich arbeiten kann. Die Schnelligkeit und Exaktheit der Messanlage einerseits und die preisgünstige Realisation der Bauteile für die Gasströmung legen es nahe, mit mehreren Messkammern und mehreren Messonden zu arbeiten, deren Ausgangssignale sodann an eine mehrkanalige elektronische Messeinheit angelegt werden können. Auf diese Weise lassen sich in grösseren Labors die Kosten nochmals senken.

Die hohe Sensibilität der Messsonde erlaubt es, im Gegensatz zu den bekannten Verfahren, mit einer Momentanmessung zu arbeiten.

## Patentansprüche

1. Messeinrichtung zur Durchführung der Messung der Sauerstoffpermeabilität, mit einer Messkammer (9), in der der Prüfling (10) angeordnet ist, wobei über eine Zuleitung (1) eine Druckquelle mittels einem Strömungsteiler zwei Teilluftströme liefert, von denen der eine Teilluftstrom über eine Leitung (8) als Messluftstrom an einer Seite des Prüflings (10) durch die Messkammer geführt und von dort zur Messsonde (12) geleitet ist, dadurch gekennzeichnet, dass der andere Teilluftstrom gleich wie der vorgenannte Teilluftstrom volumenkonstant geführt ist und als Referenzluftstrom über eine Leitung (7) direkt an die Messsonde angelegt ist, während zudem an der anderen Seite des Prüflings (10) durch die Messkammer (9) ein von dem volumenkonstanten Messluftstrom und Referenzluftstrom unabhängiges Gas oder Gasgemisch angelegt ist, welches gegenüber dem Referenzluftstrom sauerstoffangereichert ist, und dass ferner die Messsonde eine Zirkoniumoxid-Sauerstoffmesssonde ist, an welcher der Messluftstrom und der Referenzluftstrom anliegen und wobei die Zirkoniumoxid-Sauerstoffmesssonde ein Ausgangssignal an ein Voltmeter (17) liefert.

2. Messeinrichtung nach Anspruch 1, dadurch gekennzeichnet, dass die Druckquelle eine Druckgasflasche (2) ist, deren Austrittsluftstrom durch den Strömungsteiler (5) oder einen Durchflussmengenmesser in zwei volumenkonstante Luft- oder Gasströme unterteilbar ist.

3. Messeinrichtung nach Anspruch 1, dadurch gekennzeichnet, dass die Druckquelle mindestens eine Zirkulationspumpe (6) ist, die zwei volumenkonstante Luft- oder Gasströme liefert.

4. Messeinrichtung nach Anspruch 3, dadurch gekennzeichnet, dass nach der Messonde (12) ein Umschaltventil (19) in der Austrittsleitung (21) für den Messluftstrom angeordnet ist, welches mit einer Rückleitung (20) zur Zuleitung (1) verbunden ist zur geschlossenen Führung des Messluftstromes zur Durchführung einer Agglomerationsmessung.

5. Verfahren zur Messung der Sauerstoffpermeabilität eines Prüflings, nämlich einer Folie oder eines Hohlkörpers mittels einer Messvorrichtung nach Anspruch 1, dadurch gekennzeichnet, dass auf einer Seite des Prüflings Luft oder ein Inertgas und auf der anderen Seite ein sauerstoffangereichertes Gasgemisch oder reiner Sauerstoff anliegt, wobei volumenkonstant ein geteilter Luftstrom einesteils als Referenzluftstrom direkt und andererseits als Messluftstrom kontinuierlich über eine Messkammer, in der infolge der Permeabilität des Prüflings dieser Luftstrom mit Sauerstoff angereichert wird, einer Messzelle zugeführt wird, wo beide Luftstromteile momentan bezüglich ihrer Sauerstoffkonzentration verglichen werden und ein der Sauerstoffkonzentrationsdifferenz proportionales Signal gemessen wird.

6. Verfahren nach Anspruch 5, dadurch gekennzeichnet, dass der Messluftstrom und der Referenzluftstrom in offener Zirkulation geführt werden.

7. Verfahren nach Anspruch 5, dadurch gekennzeichnet, dass der Messluftstrom im geschlossenen Kreislauf geführt wird.

## Claims

1. A measuring device for carrying out the measurement of the oxygen permeability, with a measuring chamber (9) in which the test-piece is arranged, wherein via a supply (1) a pressure source by way of a flow divider delivers two part air flows, of which the one part air flow via a conduit (8) as a measurement air flow is guided on one side of the test-piece (10) through the measuring chamber and from here is lead to the measuring probe (12), characterised in that the other part air-flow just as the previously mentioned part air flow is led volume-constantly and as a reference air flow via a conduit (7) is applied directly to the measuring probe, whilst furthermore on the other side of the test-piece (10) through the measuring chamber (9) there is applied a gas or gas mixture, independent of the volume-constant measurement air flow and reference air flow, which with respect to the reference air flow is enriched with oxygen, and that further the measuring probe is a zirconium oxide oxygen measuring probe, at which there prevails the measurement air flow and the reference air flow and wherein the zirconium oxide oxygen measuring probe delivers an exit signal to a measuring signal (17).

2. A measuring device according to claim 1, characterised in that the pressure source is a pressurised gas bottle (2) whose exit air flow by way of the flow divider (5) or a throughput gauge can be subdivided into two volume-constant air or gas flows.

3. A measuring device according to claim 1, characterised in that the pressurised source is at least one circulation pump (6) which delivers two volume-constant air and gas flows.

4. A measuring device according to claim 3, characterised in that after the measuring probe (12) there is arranged a switch-over valve (19) in the exit conduit (21) for the measurement air flow, said valve being connected to a return conduit (20) to the supply conduit (1) for the closed leading of the measurement air flow for carrying out an agglomeration measurement.

5. A method for measuring the oxygen permeability of a test-piece, specifically of a foil or of a hollow body by way of a measuring device according to claim 1, characterised in that on one side of the test-piece there prevails air or an inert gas and on the other side an oxygen enriched gas mixture or pure oxygen, wherein in a volume-constant manner a divided air flow, for the one part as a reference air flow directly and for the other part as a measurement air flow via a measuring chamber, in which as a result of the permeability of the test-piece this air flow is enriched with oxygen, is supplied to a measuring cell, where both air flow parts momentarily with respect to their oxygen concentration are compared and a signal proportional to the oxygen concentration difference is measured.

6. A method according to claim 5, characterised in that the measurement air flow and the reference air flow are led in an open circulation.

7. A method according to claim 5, characterised in that the measurement air flow is led in a closed circulation.

## Revendications

1. Dispositif de mesure pour effectuer la mesure de la perméabilité à l'oxygène, avec une chambre de mesure (9) dans laquelle est disposé l'échantillon (10), une source de fluide sous pression délivrant par une conduite d'alimentation (1), au moyen d'un diviseur de flux, deux flux partiels d'air dont l'un est dirigé par une conduite (8) à travers la chambre de mesure d'un côté de l'échantillon (10), comme flux d'air de mesure, et est dirigé de là vers la sonde de mesure (12), **caractérisé** en ce que l'autre flux partiel d'air est délivré, tout comme le flux partiel d'air précité, à volume constant et est, par une conduite (7), appliqué directement à la sonde de mesure, comme flux d'air de référence, tandis qu'en outre un gaz ou mélange gazeux, qui est indépendant des flux d'air de mesure et d'air de référence à volume constant et qui est enrichi en oxygène par rapport au flux d'air de référence, est dirigé à travers la chambre de mesure (9) de l'autre côté de l'échantillon (10), et en ce que, de plus, la sonde de mesure est une sonde de mesure d'oxygène au dioxyde de zirconium, à laquelle sont appliqués le flux d'air de mesure et le flux d'air de référence, la sonde de mesure d'oxygène au dioxyde de zirconium délivrant un signal de sortie à un voltmètre (17).

2. Dispositif de mesure selon la revendication 1, **caractérisé** en ce que la source de fluide sous pression est une bouteille (2) de gaz comprimé, dont le flux d'air de sortie peut être divisé, par le diviseur de flux (5) ou par un débitmètre, en deux flux d'air ou de gaz à volume constant.

3. Dispositif de mesure selon la revendication 1, **caractérisé** en ce que la source de fluide sous pression est au moins une pompe de circulation (6), qui délivre deux flux d'air ou de gaz à volume constant.

4. Dispositif de mesure selon la revendication 3, **caractérisé** en ce qu'une soupape de commutation (19) est disposée à la suite de la sonde de mesure (12) dans la conduite de sortie (21) pour le flux d'air de mesure, soupape qui est raccordée à une conduite (20) de retour vers la conduite d'alimentation (1) afin de guider en circuit fermé le flux d'air de mesure pour effectuer une mesure d'agglomération.

5. Procédé de mesure de la perméabilité à l'oxygène d'un échantillon, à savoir d'une feuille ou d'un corps creux, au moyen d'un dispositif de mesure selon la revendication 1, **caractérisé** en ce que de l'air ou un gaz inerte est appliqué d'un côté de l'échantillon, et un mélange gazeux enrichi en oxygène, ou de l'oxygène pur, est appliqué de l'autre côté, un flux d'air divisé étant dirigé à volume constant vers une cellule de mesure, pour une partie directement en tant que flux d'air de référence et pour l'autre partie, en tant que flux d'air de mesure, en passant par une chambre de mesure dans laquelle, du fait de la perméabilité de l'échantillon, ce flux d'air est enrichi en oxygène, les valeurs instantanées de concentration en oxygène des deux parties de flux d'air étant comparées, et un signal proportionnel à la différence de concentration en oxygène étant mesuré.

6. Procédé de mesure selon la revendication 5, **caractérisé** en ce que le flux d'air de mesure et le flux d'air de référence sont dirigés en circulation ouverte.

7. Procédé de mesure selon la revendication 5, **caractérisé** en ce que le flux d'air de mesure est dirigé en circuit fermé.
